# FASCICULE DE BREVET EUROPEEN

(11) **EP 0 518 759 B1**
(45) Date de publication et mention de la délivrance du brevet: **14.02.1996**
(21) Numéro de dépôt: 92401608.2
(22) Date de dépôt: 10.06.1992
(51) Int. Cl.: F16F 3/08, F16F 1/36, B60K 5/12

(54) **Perfectionnements aux anneaux limiteurs des supports élastiques et à leurs procédés de fabrication**
Verbesserungen an Begrenzerringen der elastischen Lager und des Verfahrens zu ihrer Herstellung
Improvements to limiter-rings of elastic supports and to their manufacturing process

(30) Priorité: 11.06.1991 FR 9107079
(43) Date de publication de la demande: 16.12.1992
(73) Titulaire: HUTCHINSON, F-75008 Paris (FR)
(72) Inventeur: Bodin, François, F-38600 Fontaine (FR); Georget, Pierre, F-37170 Chambray les Tours (FR)
(74) Mandataire: Behaghel, Pierre

(56) Documents cités:
- EP-A- 0 101 235
- EP-A- 0 213 043
- EP-A- 0 213 089
- EP-A- 0 418 717
- DE-U- 8 714 888
- FR-A- 2 451 511
- GB-A- 2 111 167
- US-A- 1 703 296
- US-A- 3 892 398

## Description

L'invention est relative aux anneaux destinés à équiper les supports élastiques comprenant deux armatures métalliques reliées entre elles par une pièce en élastomère, lesdits anneaux ayant pour but de limiter l'écartement mutuel accidentel des deux armatures en vue d'empêcher la destruction des supports considérés par arrachement.

De tels anneaux ne doivent pas engendrer de réaction brutale en cas de débattements exceptionnels des supports qu'ils équipent.

La limitation en traction qu'ils assurent doit au contraire être assurée avec une grande progressivité.

Dans certains modes de réalisation connus de tels anneaux, ceux-ci, présentant une section rectangulaire, sont constitués par une succession de couches superposées identiques constituées par un tissu inextensible imprégné de caoutchouc (voir document US-A-1 703 296).

L'invention propose une formule plus économique pour la constitution desdits anneaux, rendant inutile la confection préalable d'une bande en tissu inextensible imprégnée de caoutchouc, ladite formule conduisant en outre à l'obtention d'anneaux particulièrement résistants à la traction.

A cet effet, les anneaux limiteurs selon le préambule de la revendication 1 sont caractérisés en ce qu'ils sont composés d'une succession de couches alternées constituées chacune par un ruban en matière élastiquement déformable et par une nappe de fils parallèles résistants à la traction.

Pour ce qui est du procédé de fabrication des anneaux limiteurs selon la revendication 1, il est caractérisé par la suite des étapes suivantes : on enroule successivement autour d'un mandrin cylindrique dur une pluralité de couches composées alternativement par une feuille en matériau élastiquement déformable et par une nappe de fils parallèles résistants à la traction placés côte à côte selon la direction de l'axe du mandrin, puis on assemble entre elles ces différentes couches, et on découpe le rouleau composite ainsi formé en rondelles, lesquelles constituent les anneaux limiteurs désirés.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en vue perspective un support élastique de moteur à combustion interne de véhicule équipé d'un anneau limiteur conforme à l'invention.

La figure 2 montre en coupe axiale l'ensemble, également conforme à l'invention, d'un mandrin servant à la fabrication d'un tel anneau limiteur, et de son garnissage.

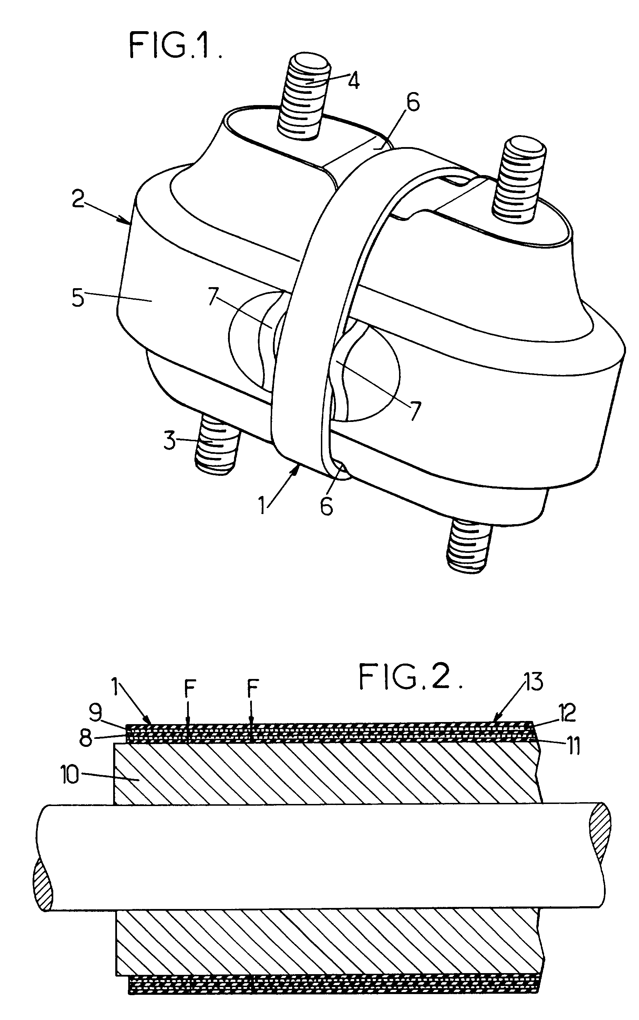

L'anneau limiteur considéré 1 tel qu'illustré sur la figure 1 entoure un support antivibratoire hydraulique désigné de façon générale par la référence 2 et destiné à être interposé aux fins de support et d'amortissement entre un châssis de véhicule et le moteur à combustion interne de ce véhicule.

Ledit support comprend :
- une armature inférieure métallique solidaire de deux goujons en attente 3 faisant saillie vers le bas,
- une armature supérieure métallique solidaire de deux goujons en attente 4 faisant saillie vers le haut,
- et une paroi de forme générale cylindrique 5 en élastomère reliant entre elles les deux armatures ci-dessus et délimitant avec celles-ci une chambre hydraulique associée de toute manière désirable connue avec des moyens d'étranglement permettant d'engendrer les amortissements désirés.

La face extérieure du support 2 présente des creux 6 et bossages 7 permettant de maintenir en place l'anneau 1 autour du support.

Cet anneau présente une section rectangulaire et est composé par une succession de spires superposées 8 et 9 constituées respectivement par un ruban 8 de matériau déformable et par une nappe 9 de fils parallèles juxtaposés côte à côte selon la direction de l'axe de l'anneau.

Les différentes couches superposées sont sensiblement cylindriques, étant enroulées jointivement en spirale les unes sur les autres, à partir d'une même double couche 8,9 de la manière qui sera décrite plus en détail ci-après.

Le ruban 8 est de préférence constitué en un matériau élastomère.

Les fils 3 présentent un excellente résistance à la traction.

Ils sont de préférence constitués en polyester, mais pourraient également l'être en un métal ou alliage tel que l'acier laitonné, en cellulose régénérée (rayonne), en verre, en carbone, en un aramide tel que celui diffusé sous l'appellation Kevlar (Marque déposée) par la Société du Pont de Nemours (il s'agit d'un poly(1,4-phénylène) téréphtalamide) ou que celui diffusé sous l'appellation Twaron par la Société Akzo, en l'une des matières synthétiques connues sous les noms de Kuralon (alcool polyvinylique, Société Kuraray) et de Hyten (Société du Pont de Nemours), etc.

Une couche de ruban continue 8 constitue chacune des deux faces délimitant l'anneau 1 intérieurement et extérieurement.

Le nombre total des couches superposées est en général compris entre 2 et 10.

L'épaisseur radiale globale de l'anneau est généralement comprise entre 2 et 6 mm et sa largeur axiale, supérieure à ladite épaisseur, entre 5 et 15 mm.

Le diamètre de chaque fil est généralement compris entre 0,3 et 3 mm.

Pour fabriquer un tel anneau limiteur, on procède avantageusement comme suit.

On enroule successivement sur un même manchon rigide 10 (figure 2) une large feuille 11 en matériau déformable et une large nappe 12 de fils parallèles de façon à constituer un rouleau à spires jointivement superposées.

Puis on assemble entre elles ces différentes spires de façon à former un rouleau semi-rigide 13.

Cet assemblage est obtenu notamment par vulcanisation de l'ensemble si la feuille 11 est constituée en caoutchouc, ou encore par séchage d'une colle appropriée placée entre les différentes spires lors de leur enroulement.

Puis on tronçonne le rouleau 13 ainsi formé selon les flèches F après l'avoir dégagé axialement du rouleau 10 ou avant ce dégagement, de façon à former des bagues ou rondelles qui constituent les anneaux limiteurs 1 désirés.

En suite de quoi, et quel que soit le mode de réalisation adopté, on dispose d'anneaux limiteurs dont la constitution et la fabrication résultent suffisamment de ce qui précède.

Ces anneaux limiteurs présentent de nombreux avantages par rapport à ceux connus jusqu'à ce jour, et notamment les suivants :
- en raison de la répartition quadrillée et donc très dense de leurs fils constitutifs, ils présentent une excellente résistance à la traction,
- cette qualité n'est pas obtenue au détriment de la progressivité des limitations en traction assurées par de tels anneaux, vu que, en raison même de la répartition du matériau indéformable en couches superposées, la totalité de la masse de ce matériau est appelée à travailler à la compression lors de telles limitations,
- la fabrication des anneaux en question est particulièrement économique, vu notamment qu'elle permet d'éviter le recours à des opérations de moulage individuelles.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes qui se situent dans le cadre des revendications.

## Revendications

1. Anneau (1) présentant une section rectangulaire et destiné à équiper un support élastique (2) comprenant deux armatures métalliques (3, 4) reliées entre elles par une pièce (5) en élastomère, en vue de limiter l'écartement mutuel accidentel des deux armatures, caractérisé en ce qu'il est composé d'une succession de couches alternées constituées chacune par un ruban (8) en matière élastiquement déformable et par une nappe (9) de fils parallèles résistants à la traction.

2. Procédé pour fabriquer des anneaux limiteurs selon la revendication 1, caractérisé par la suite des étapes suivantes : on enroule successivement autour d'un mandrin cylindrique dur (10) une pluralité de couches composées alternativement par une feuille en matériau élastiquement déformable (11) et par une nappe (12) de fils parallèles résistants à la traction placés côte à côte selon la direction de l'axe du mandrin, puis on assemble entre elles ces différentes couches, et on découpe le rouleau composite (13) ainsi formé en rondelles, lesquelles constituent les anneaux limiteurs désirés (1).

## Patentansprüche

1. Ring (1) mit rechteckigem Querschnitt zum Bestücken einer elastischen Abstützung (2), die aus zwei metallischen Armaturen (3, 4) besteht, die miteinander durch ein Werkstück (5) aus elastomerem Material verbunden sind,zur Begrenzung des gegenseitigen möglichen Abstandes der beiden Armaturen, dadurch gekennzeichnet, daß der Ring aus abwechselnd aufeinanderfolgenden Schichten gebildet ist, von denen eine aus einem Band (8) aus einem deformierbaren, elastischen Material und die andere aus einer Lage (9) aus parallelen zugfesten Drähten besteht.

2. Verfahren zur Herstellung von Begrenzungsringen gemäß Anspruch 1, gekennzeichnet durch folgende Stufen: man rollt nacheinander mehrere Schichten um einen harten, zylindrischen Kern (10), die abwechselnd aus einer Folie (11) aus einem deformierbaren, elastischen Material und einer Lage (12) aus zugfesten, parallel verlaufenden Drähten besteht, die in Richtung der Achse des Kerns nebeneinander angeordnet sind, fügt die einzelnen Schichten aneinander und schneidet die so gebildete Rolle (13) aus zusammengesetztem Material in Ringe, die die gewünschten Begrenzungsringe (1) bilden.

## Claims

1. Ring (1) having a rectangular section for fitting to a resilient support (2) comprising two metal cores (3, 4) interconnected by a piece (5) of elastomer, in view of limiting the extent to which the cores can be moved apart accidentally, characterized in that it is made up of a succession of alternating layers each constituted by a tape (8) of elastically deformable material and by a sheet (9) of parallel threads that are strong in traction.

2. Method of manufacturing limit rings according to claim 1, characterized by the sequence of following steps: a plurality of layers are wound in succession around a hard cylindrical mandrel (10), the layers being alternately constituted by a sheet (11) of elastically deformable material and a sheet (12) of parallel threads that are strong in traction and that are placed side by side in the axial direction of the mandrel; the various layers are then assembled together; and the composite roll (13) formed in this way is then cup up into slices, which constitute the desired limit rings (1).
